(19) **Europäisches Patentamt**

**European Patent Office**

**Office européen des brevets**

(11) **EP 1 430 592 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(21) Anmeldenummer: 02799415.1

(22) Anmeldetag: **20.09.2002**

(51) Int Cl.$^7$: **H02N 2/00**, H01L 41/09

(86) Internationale Anmeldenummer:
**PCT/EP2002/010559**

(87) Internationale Veröffentlichungsnummer:
**WO 2003/028199 (03.04.2003 Gazette 2003/14)**

(54) **PIEZOMOTOR MIT FÜHRUNG**

PIEZOMOTOR WITH A GUIDE

PIEZOMOTEUR AVEC GUIDAGE

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LV**

(30) Priorität: **21.09.2001 DE 10146703**

(43) Veröffentlichungstag der Anmeldung:
**23.06.2004 Patentblatt 2004/26**

(73) Patentinhaber: **Elliptec Resonant Actuator AG 44379 Dortmund (DE)**

(72) Erfinder:
- **VARADI, Peter C.**
  **El Cerrrito, CA 94530 (US)**
- **MAGNUSSEN, Björn, Dr.**
  **58638 Iserlohn (DE)**
- **HAGEMANN, Benjamin**
  **44229 Dortmund (DE)**
- **SCHULER, Dieter**
  **44137 Dortmund (DE)**
- **DAVIDSON, Erick M.**
  **El Cerrito, CA 94530 (US)**

(74) Vertreter: **Wolff, Felix, Dr. et al Kutzenberger & Wolff Theodor-Heuss-Ring 23 50668 Köln (DE)**

(56) Entgegenhaltungen:
EP-A- 1 089 424      WO-A-01/41228
US-A- 4 953 413      US-A- 5 917 269
US-A- 5 917 270      US-A- 6 150 749

- **PATENT ABSTRACTS OF JAPAN vol. 013, no. 218 (E-761), 22. Mai 1989 (1989-05-22) & JP 01 030467 A (CANON INC), 1. Februar 1989 (1989-02-01)**

**Beschreibung**

Die vorliegende Erfindung betrifft ein Antriebssystem bestehend aus mindestens einem Motor, mit jeweils zumindest einem mechanischen Schwingungsgenerator sowie jeweils mindestens einem Resonanzkörper und einer Vorrichtung, die von dem Motor (1) angetrieben wird, wobei der Resonanzkörper eine Kontaktfläche aufweist, die mit der Oberfläche der Vorrichtung zusammenwirkt, um diese anzutreiben. Solche Antriebssysteme sind aus der WO-A-01/41228 bekannt.

Motoren, die mit einem mechanischen Schwingungsgenerator arbeiten, stellen ein alternatives Antriebskonzept zu kleinen Elektromotoren dar, die in der Regel zu laut und zu teuer sind. Diese gattungsgemäßen Motoren weisen mindestens einen Schwingungsgenerator auf, mit dem mechanische Schwingungen erzeugt werden, die beispielsweise durch einen Resonanzkörper verstärkt werden und von diesem Resonanzkörper auf eine anzutreibende Vorrichtung, beispielsweise ein Stab oder ein Rad, übertragen werden und dieses antreiben. Die Resonanzkörper schwingen dabei vorteilhafterweise in einer Resonanzfrequenz, die Amplitude der Schwingungen hängt jedoch in jedem Fall stark von der Frequenz der vom Schwingungsgenerator erzeugten mechanischen Schwingungen ab.

Diese Antriebssysteme haben jedoch den Nachteil, daß durch Fertigungstoleranzen oftmals Vibrationsanteile nicht in Richtung der gewünschten bewegungserzeugenden Richtung wirken und daß der Stab oder der Rotor nicht in der gewünschten Lage oder Spur verbleiben oder zusätzliche Führungselemente benötigt werden.

Es stellte sich deshalb die Aufgabe, ein Antriebssystem zur Verfügung zu stellen, das die Nachteile des Standes der Technik nicht aufweist.

Gelöst wird diese Aufgabe durch ein Antriebssystem gemäß Anspruch 1.

Es war für den Fachmann überaus erstaunlich, daß es mit einem Mittel auf der Kontaktfläche des Resonanzkörpers und/oder einem Mittel auf der Oberfläche der Vorrichtung gelingt, Vibrationsanteile in Richtung der gewünschten bewegungserzeugenden Vibration zu kanalisieren und die Vorrichtung mit einem verringerten Aufwand an externer Lagerung in der gewünschten Spur oder Lage zu stabilisieren. Besonders erstaunlich ist, daß es gelingt die Führung der Vorrichtung durch Vibrationsanteile und nicht nur durch Formschluß zu erreichen, wobei sich diejenigen Bewegungsanteile, die nicht zum Vortrieb beitragen, gegenseitig kompensieren. Dies hat eine erhebliche Reduzierung der Reibungsverluste zur Folge.

Vorzugsweise ist das Mittel mindestens eine Ein- oder Ausbuchtung in der Kontaktfläche des Resonanzkörpers oder in der Oberfläche der anzutreibenden Vorrichtung.

Ebenso bevorzugt ist das Mittel ein Bereich auf der Kontaktfläche des Resonanzkörpers oder der Oberfläche der anzutreibenden Vorrichtung, dessen Reibkoeffizient sich mit den anderen Bereichen der Kontaktfläche bzw. Oberfläche unterscheidet. In einer bevorzugten Ausführungsform weist die Oberfläche mehrere Ein- oder Ausbuchtungen oder mehrere Bereiche mit jeweils unterschiedlichen Reibkoeffizienten auf, die vorzugsweise in regelmäßigen Abständen zueinander angeordnet sind.

Die Ein- oder Ausbuchtungen haben vorzugsweise eine Höhe von 0,05 bis 10 mm, besonders bevorzugt von 0,5 bis 3 mm, wobei der Motor selbst vorzugsweise eine Größe von 18 - 30 mm aufweist. Der Fachmann erkennt, daß die Ausbuchtungen bei einem kleineren Motor vorzugsweise kleiner und bei einem größeren Motor vorzugsweise größer sind.

In der vorliegenden Erfindung weist der Resonanzkörper eine Kontaktfläche auf, die mit einem anzutreibenden Körper zusammenwirkt und diesen antreibt. Vorzugsweise schwingt diese Kontaktfläche asymmetrisch in mehrere Richtungen unabhängig davon, ob sie mit dem anzutreibenden Körper in Kontakt steht oder nicht. Ganz besonders bevorzugt führt die Kontaktfläche eine elliptische Bewegung aus. Ebenfalls bevorzugt schwingt diese Kontaktfläche bei unterschiedlichen Betriebsfrequenzen, vorzugsweise Resonanzfrequenzen, des Piezomotors, in unterschiedlichen Richtungen unabhängig davon, ob sie mit dem anzutreibenden Körper in Kontakt steht oder nicht und führt die für den jeweiligen Antrieb des anzutreibenden Körpers benötigten makroskopischen Bewegungen aus, so dass es für den Antrieb keiner zusätzlichen Mechanismen oder Bauteile bedarf.

In einer bevorzugten Ausführungsform weist das Antriebssystem mindestens zwei Motoren auf, die gleich oder gegensinnig angeordnet sein können.

Die Motoren werden vorzugsweise beispielsweise mit einem federnden Bauteil gegen die Vorrichtung gedrückt. Bei mehreren Motoren kann die Andrückkraft gleich oder unterschiedlich sein, wobei unterschiedliche Andrückkräfte bevorzugt werden.

Weist das erfindungsgemäße Antriebssystem mehrere Motoren auf, so sind diese vorzugsweise einzeln oder parallel ansteuerbar. Vorzugsweise werden die Motoren mit unterschiedlichen Frequenzen und/oder unterschiedlichen Amplituden betrieben.

Das Antriebssystem ist vorzugsweise so gestaltet, daß die Vorrichtung translatorisch und/oder rotatorisch angetrieben werden kann, wobei der Antrieb in einer bevorzugten Ausführungsform der vorliegenden Erfindung bidirektional erfolgt. Vorzugsweise führt der Motor eine zyklisch wiederkehrende Bewegung aus. Bei jedem Zyklus erfolgt ein gewisser Vortrieb der angetriebenen Vorrichtung, wobei der Vortrieb über eine beliebige Strecke erfolgen kann.

Besonders bevorzugt schwingt der Motor im Bereich seiner Eigen-(Resonanz-) Frequenz. Ganz besonders bevorzugt schwingt der Motor im Bereich zweier unterschiedlicher Eigenfrequenzen, so dass die anzutreibende Vorrichtung in zwei entgegengesetzte Richtungen antreibbar ist.

Vorzugsweise besteht der Schwingungsgenerator aus einem piezoelektrischen Material. Ganz besonders bevorzugt ist der Schwingungsgenerator ein einziges piezoelektrisches Bauelement, das in monolithischer Vielschichtbauweise aus einem Stapel aus mindestens zwei Keramikschichten und jeweils einer zwischen zwei Keramikschichten angeordneten Elektrodenschicht gefertigt ist. In einer überaus bevorzugten Ausgestaltung der Erfindung bestehen die Elektrodenschichten im wesentlichen aus Kupfer.

In einer weiteren besonders bevorzugten Ausgestaltung der Erfindung besitzt das piezoelektrische Bauelement zwei Terminals, über die wenigstens ein Signal an das Bauelement übertragen wird und es zu Schwingungen anregt. Als Terminal wird hierbei die Verbindung zwischen der elektrischen Leitung, über die das Signal von der Erregerquelle zu dem Piezomotor geleitet wird, und dem piezoelektrischen Bauelement verstanden. In einer ganz besonders bevorzugten Ausgestaltung der Erfindung wird dem piezoelektrischen Bauelement ein erstes Signal übermittelt und die Kontaktfläche des Resonanzkörpers zur Schwingung in eine erste Richtung angeregt. Gleichermaßen wird bei Übermittlung eines zweiten elektrischen Signals an das piezoelektrische Bauelement die Kontaktfläche zur Schwingung in eine zweite Richtung angeregt.

In einer besonders vorteilhaften Ausgestaltung des erfindungsgemäßen Antriebssystems ist das an das piezoelektrische Bauelement übermittelte Signal sinusförmig oder hat die Form eines Rechtecksignals. Die Erzeugung und Übermittlung eines sägezahnförmigen Signals ist somit nicht notwendig.

In einer weiteren bevorzugten Ausgestaltung der Erfindung wird die mit der Oberfläche der Vorrichtung zusammenwirkende Kontaktfläche des Resonanzkörpers zu solchen Schwingungen angeregt, die die Vorrichtung bei zwei an das piezoelektrische Bauelement übermittelten Signalen mit unterschiedlichen Frequenzen, vorzugsweise Eigen-(Resonanz-) Frequenzen, in zwei Richtungen antreibbar ist, wobei die Amplitude der Schwingungen stark von der Frequenz abhängt. In einer besonders bevorzugten Ausgestaltung der Erfindung wird die Vorrichtung hierbei in zwei entgegengesetzte Richtungen angetrieben.

In einer weiteren bevorzugten Ausgestaltung der Erfindung besitzt der Motor eine im wesentlichen zweidimensionale Form, bei der sich die geometrische Form in der dritten, vorzugsweise senkrecht zu der durch die ersten beiden Achsen aufgespannten Ebene verlaufenden dritten Raumebene im wesentlichen nicht verändert. Der Fachmann versteht aber, daß das erfindungsgemäße Prinzip der zweidimensionalen Form auch dann verwirklicht ist, wenn kleine Abweichungen von der Zweidimensionalität, beispielsweise durch nachträglich eingebrachte Abschrägungen von Kantenbereichen, vorliegen.

In einer weiteren bevorzugten Ausgestaltung der Erfindung wird die Kraftübertragung von dem Motor auf die antreibbare Vorrichtung dadurch verbessert, dass die Kontaktfläche des Resonanzkörpers oder die Oberfläche der anzutreibenden Vorrichtungen Einbuchtungen aufweisen. Hierdurch gelingt es, die Vibrationsanteile in Richtung der gewünschten bewegungserzeugenden Vibration zu kanalisieren und/oder die Vorrichtung mit einem verringerten Aufwand an externer Lagerung in der gewünschten Spur oder Lage zu stabilisieren.

Die Einbuchtungen in der Kontaktfläche des Resonanzkörpers oder in der Oberfläche der anzutreibenden Vorrichtung können auf jede beliebige dem Fachmann geläufige Art und Weise hergestellt werden. Beispielsweise können sie durch spanabhebende Bearbeitung oder durch plastisches Umformen in die Kontaktfläche des Resonanzkörpers oder in die Oberfläche der Vorrichtung eingearbeitet werden. Weiterhin können die Einbuchtungen beispielsweise beim Gießen oder Spritzgießen des jeweiligen Bauteils in dieses eingeformt werden.

In einer weiteren bevorzugten Ausführungsform sind die Einbuchtungen auch durch Abrieb, der zwischen dem Resonanzkörper und der Vorrichtung stattfindet, erzeugbar.

Das erfindungsgemäße Antriebssystem kann so gestaltet werden, daß es die Eigenschaften eines Schrittmotors aufweist. Dies wird dadurch erreicht, daß es bedingt durch die Oberflächenstruktur und/oder die Form der Oberfläche zu unterschiedlichen Kontaktsituationen zwischen dem Resonanzkörper und der Vorrichtung kommt, die unterschiedliche Vorschübe der Vorrichtung bewirken. Bei einer Anordnung mit einem Motor führt eine vibratorische Anregung dazu, daß sich die Vorrichtung bewegt, bis sich die Kontaktsituation derart ändert, daß die Bewegung zum Erliegen oder zur Verlangsamung kommt. Wird dann auf eine andere Anregung umgeschaltet, so wird die Zone mit der geänderten Kontaktsituation überwunden, so daß sich die Vorrichtung weiterbewegt, bis wieder eine Zone einer anderen Kontaktsituation erreicht wird. Je nach Verhalten der vibratorischen Anregung zur dann vorliegenden Kontaktsituation kommt die Bewegung hier abermals zum Erliegen oder kann auch weitergehen. Entweder nach einer gewissen Zeit, oder feststellbar durch Sensoren oder elektrische Rückkopplung kann dann auf eine andere vibratorische Anregung umgeschaltet werden. Insbesondere kann das Umschalten der Anregung durch eine Änderung der Ansteuerfrequenz oder der Ansteueramplitude des Resonators (oder Motoren) erfolgen.

Es können auch mehrere Motoren verwendet werden, die so ausgelegt sind, daß sie bei gleicher elektrischer Anregung unterschiedliche Vibrationsanregung erzeugen.

Die Motoren können so plaziert werden, daß sie jeweils identische Kontaktsituationen erfahren. Vorteilhaft ist jedoch besonders eine gegenüber den Kontaktsituationen leicht versetzte Anordnung, so daß die Motoren zur gleichen Zeit unterschiedliche Kontaktsituationen erfahren. In dieser Anordnung können die Motoren, die eine zum Vortrieb besonders günstige Kontaktsituation besitzen, den zur Bewegung nötigen Vortriebsanteil beisteuern. Verlassen diese Motoren den Bereich des günstigen Kontaktes, so kommt die Bewegung zum Erliegen. Zu diesem Zeitpunkt ist z. B. jedoch ein anderer Motor in einen Kontaktbereich eingetreten, der einen günstigen Vorschub liefert, so daß durch Umschalten der Anregung auf diesen Motor die weitere Bewegung der Vorrichtung erzeugt wird.

Eine besondere Variante der Erfindung stellt eine Version mit nur einem Motor dar, der jedoch mehr als nur eine Kontaktfläche hat. Jede der Kontaktflächen des Motors kann in verschiedenen Kontaktsituationen zur Vorrichtung 4 stehen oder auch von dieser abheben. Dabei ist der Resonator vorteilhafterweise so gestaltet, daß er unter unterschiedlicher elektrischer Anregung unterschiedliche Vibrationen an den Kontaktflächen aufweist.

Durch das erfindungsgemäße Antriebssystem gelingt es, nahezu alle Schwingungsanteile in die gewünschte Richtung zu kanalisieren und die Lage der anzutreibenden Vorrichtung zu stabilisieren.

Im folgenden wird die Erfindung anhand der **Figuren 1 bis 13** erläutert. Diese Erläuterungen sind lediglich beispielhaft und schränken den allgemeinen Erfindungsgedanken nicht ein.

**Figur 1**     zeigt das erfindungsgemäße Antriebssystem mit einer Einbuchtung der Kontaktfläche des Resonanzkörpers.

**Figur 2**     zeigt das erfindungsgemäße Antriebssystem mit einer Ausbuchtung der Kontaktfläche des Resonanzkörpers und einer Einbuchtung der Oberfläche der Vorrichtung.

**Figur 3**     zeigt das erfindungsgemäße Antriebssystem mit einer Einbuchtung der Kontaktfläche des Resonanzkörpers.

**Figur 4**     zeigt komplementäre Formgestaltungen der Kontaktfläche des Resonanzkörpers und der Oberfläche der Vorrichtung.

**Figur 5**     zeigt eine mögliche Ausgestaltungsform einer Ausbuchtung in der Oberfläche der Vorrichtung.

**Figur 6**     zeigt die Oberfläche einer Vorrichtung mit mehreren Ausbuchtungen.

**Figur 7**     zeigt das erfindungsgemäße Antriebssystem mit zwei gleichsinnig angeordneten Motoren.

**Figur 8**     zeigt das erfindungsgemäße Antriebssystem mit zwei gegensinnig angeordneten Motoren.

**Figur 9**     zeigt das erfindungsgemäße Antriebssystem mit drei Motoren.

**Figur 10**     zeigt eine spezielle Ausgestaltungsform der Oberfläche der Vorrichtung, bei der ein Resonator die Vorrichtung in zwei Kontaktpunkten berührt.

**Figur 11**     zeigt eine weitere Ausführungsform des erfindungsgemäßen Antriebssystems mit drei Motoren.

**Figur 12**     zeigt eine Oberfläche mit unterschiedlichen Reibkoeffizienten.

**Figur 13**     zeigt eine weitere Ausführungsform einer Oberfläche mit unterschiedlichen Reibkoeffizienten.

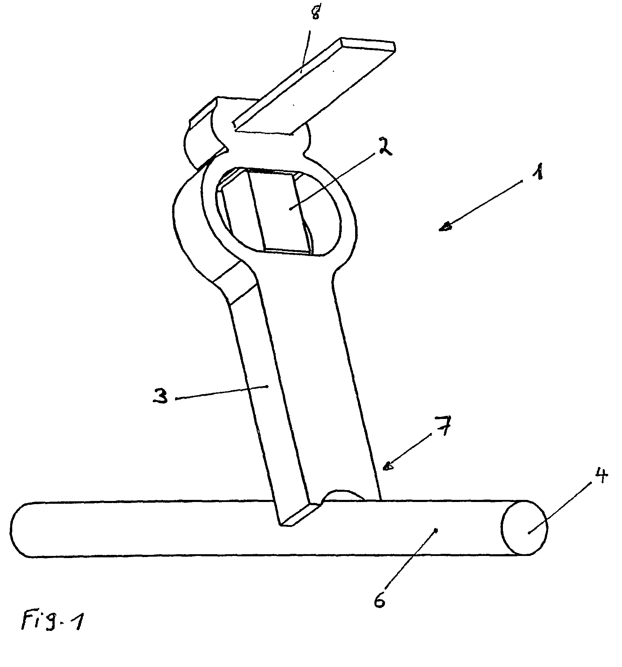

**Figur 1** zeigt das erfindungsgemäße Antriebssystem mit dem Motor 1 und der von dem Motor angetriebenen Vorrichtung 4, die in dem vorliegenden Fall ein zylindrischer Stab ist. Der Motor 1 weist einen Schwingungsgenerator 2 auf, der aus piezoelektrischem Material besteht. Dieser Schwingungsgenerator erzeugt Schwingungen, die auf den Resonanzkörper 3 übertragen werden. Der Resonanzkörper 3 hat an seiner Spitze eine Kontaktfläche 7, die mit der Oberfläche 6 des Stabes 4 zusammenwirkt und diesen vorwärts und rückwärts oder drehend antreibt. Die Kontaktfläche 7 weist eine Einbuchtung auf, so daß der Resonanzkörper 3 den Stab 4 teilweise umschließt. Der Motor 1 ist über den Resonanzkörper 3 an einem federnden Element 8 gelagert, das die Fläche 7 des Resonazkörpers 3 gegen den Stab 4 drückt.

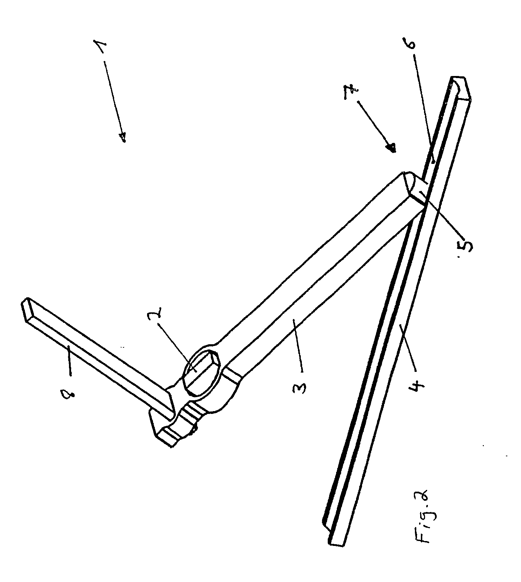

In **Figur 2** ist eine weitere Ausführungsform des erfindungsgemäßen Antriebssystems dargestellt. In dem vorliegenden Fall weist die Kontaktfläche 7 des Resonanzkörpers 3 eine Ausbuchtung 5 auf, die mit einer Einbuchtung in der Oberfläche des Stabes 4 zusammenwirkt. Durch diese Ausführungsform des erfindungsgemäßen Antriebs werden zum einen die Schwingungen in die gewünschte Richtung kanalisiert und zum anderen der Stab 4 von dem Motor 1 geführt.

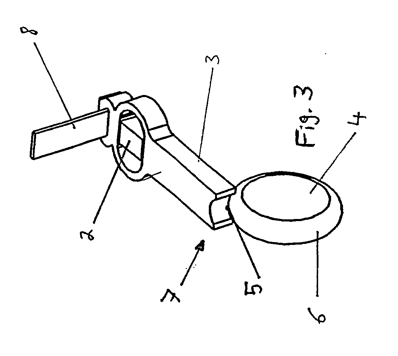

**Figur 3** zeigt eine weitere Ausführungsform des erfindungsgemäßen Antriebs. In dem vorliegenden Fall weist die Kontaktfläche 7 des Resonanzkörpers 3 eine Einbuchtung 5 auf, die mit einem Rotor 4, der eine gekrümmte Oberfläche 6 aufweist, zusammenwirkt. Durch den erfindungsgemäßen Antrieb werden zum einen die Schwingungen in die gewünschte Richtung analysiert und zum anderen der Rotor 4 von dem Resonanzkörper 3 geführt.

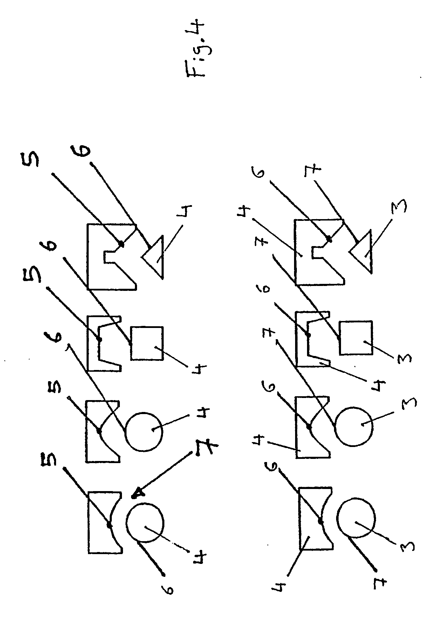

**Figur 4** zeigt eine Vielzahl von möglichen Aus- bzw. Einbuchtungen der Kontaktfläche des Resonanzkörpers bzw. der Oberfläche der angetriebenen Vorrichtung. Der Fachmann erkennt, daß die Vorrichtungen 4 nicht notwendigerweise stabförmig sein müssen, sondern die Oberfläche einer beliebigen angetriebenen Vorrichtung sein kann.

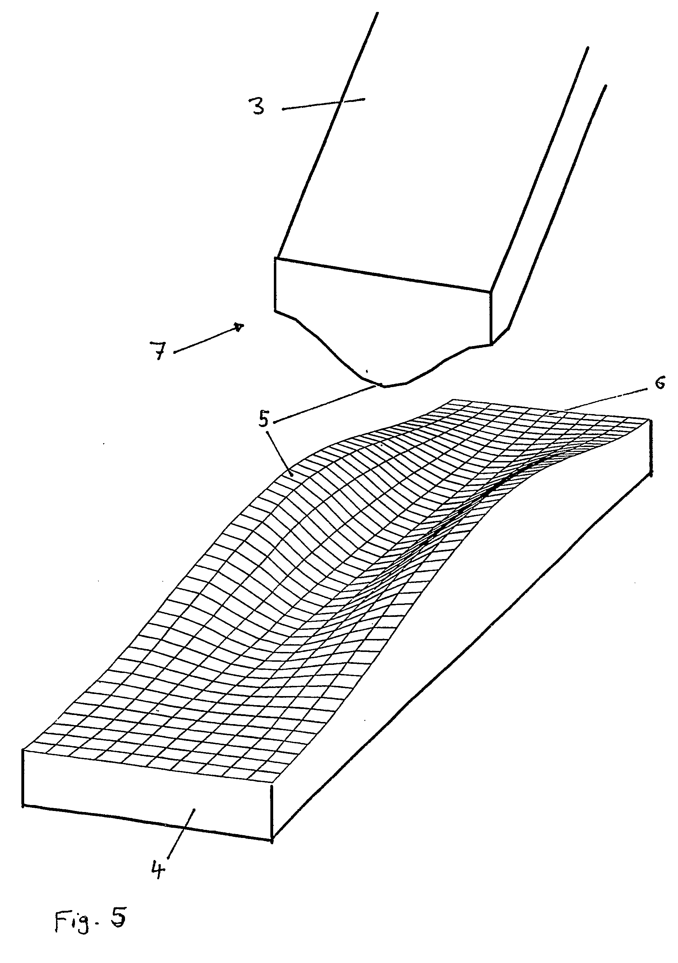

**Figur 5** zeigt eine weitere besondere Ausgestaltung der Kontaktfläche des Resonanzkörpers bzw. der Oberfläche der angetriebenen Vorrichtung. In dem vorliegenden Fall weist die Kontaktfläche 7 des Resonanzkörpers eine Ausbuchtung 5 auf. Die Oberfläche 6 der angetriebenen Vorrichtung 4 weist zwei Ausbuchtungen auf, so daß sich über einen gewissen Abschnitt der Oberfläche 6 eine Rinne formt. Auch durch das Zusammenspiel der Ausbuchtung 5 mit der Rinne werden die Schwingungen in die gewünschte Richtung kanalisiert und die Vorrichtung 4 in ihrer Lage stabilisiert. Der Fachmann erkennt, daß die unterschiedlichen Bereiche der Ausbuchtung 5 die Lage der Vorrichtung unterschiedlich stabilisieren.

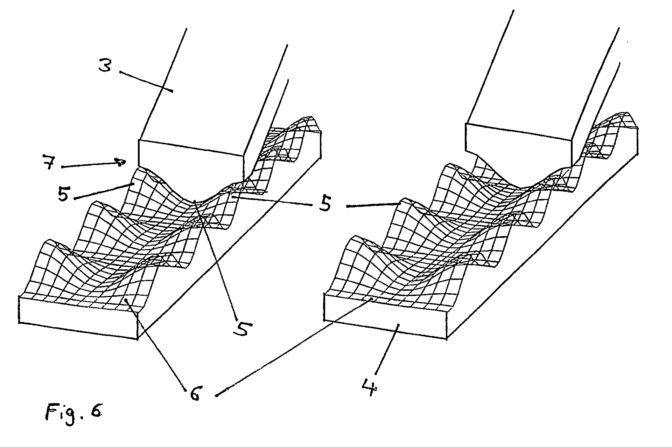

**Figur 6** zeigt ebenfalls eine besondere Ausgestaltungsform der Kontaktfläche des Resonanzkörpers und der Oberfläche der angetriebenen Vorrichtung. In dem vorliegenden Fall weist der Resonanzkörper eine Ausbuchtung und die Oberfläche 6 eine Vielzahl von Ausbuchtungen auf. In der linken Abbildung wirkt der Resonanzkörper mit einem Bereich größer Kontaktfläche und damit großer Reibung zusammen. In der rechten Abbildung wirkt der Resonanzkörper mit einem Bereich kleiner Kontaktfläche und damit kleiner Reibung zusammen.

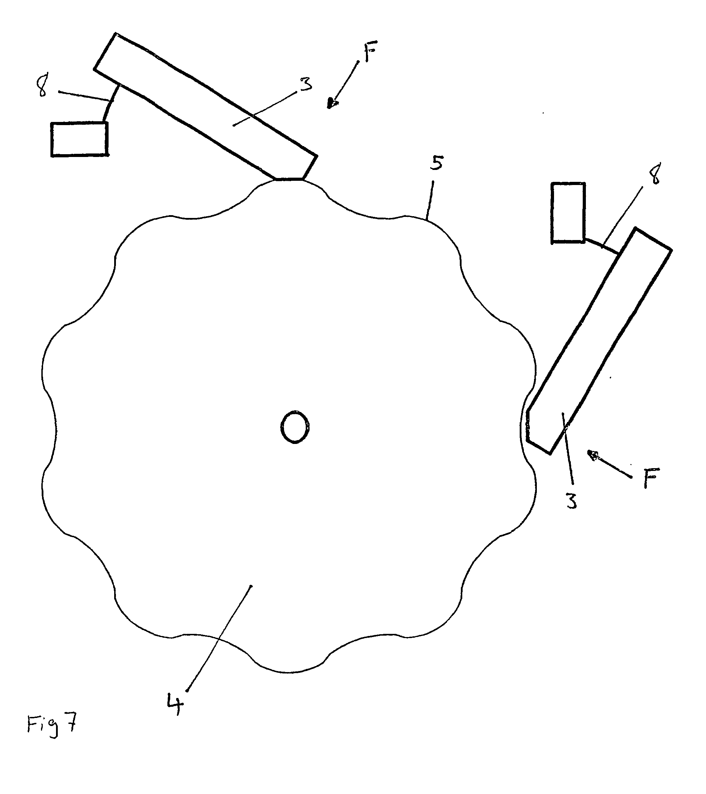

**Figur 7** zeigt das erfindungsgemäße Antriebssystem mit einem angetriebenen Rotor, der eine Vielzahl von Ausbuchtungen bzw. Einbuchtungen 5 aufweist und zwei Motoren, die in dem vorliegenden Fall gleichsinnig angeordnet sind. Die Resonanzkörper werden über Federn 8 gegen die angetriebene Vorrichtung 4 gedrückt, wobei die Andruckkräfte jeweils unterschiedlich sind. Die Andruckkraft ändert sich jeweils periodisch mit der Drehung des Rotors 4. Die Motoren können sowohl getrennt voneinander oder parallel mit unterschiedlichen Frequenzen und unterschiedlichen Amplituden angesteuert werden.

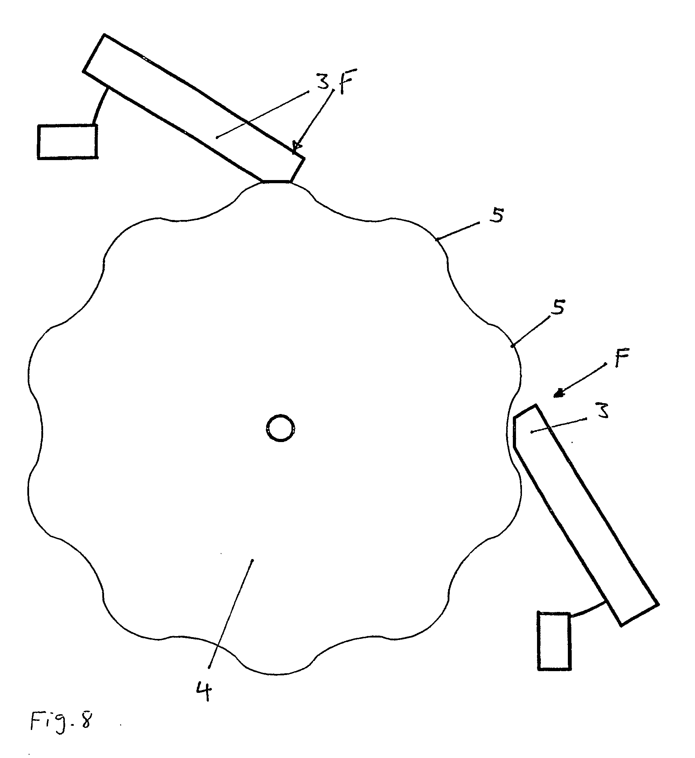

**Figur 8** entspricht im wesentlichen Figur 7, nur daß in dem vorliegenden Fall die Motoren gegensinnig angeordnet sind.

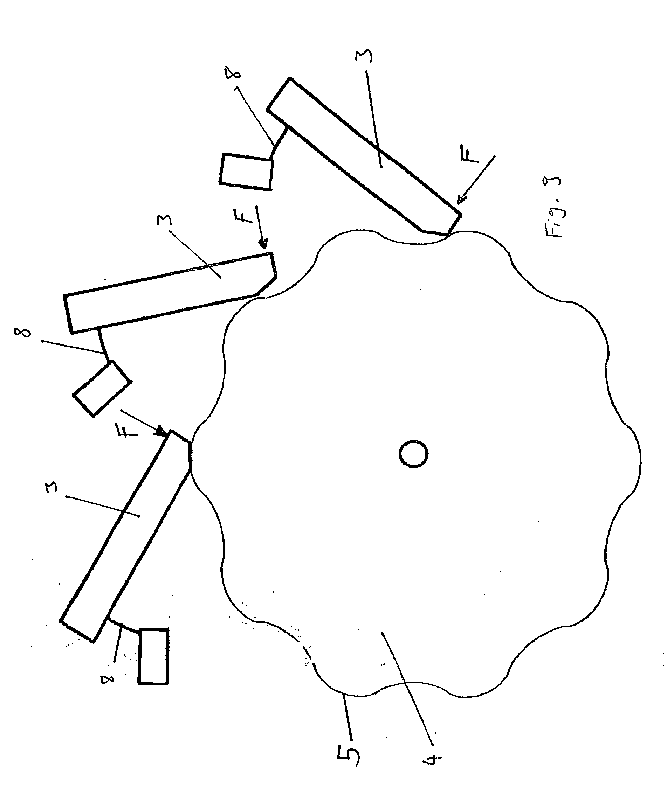

**Figur 9** zeigt ein erfindungsgemäßes Antriebssystem mit drei Motoren. Die Winkel, in denen die Motoren um den angetriebenen Rotor angeordnet sind, richtet sich nach der Anzahl der Ausbuchtungen 5 und wird gemäß der allgemeinen Formel

$$\text{Winkel des Motors} = 360/(\text{Ausbuchtungsanzahl}) \times (n + \text{Motor-Nr.}/$$

$$/ \text{ Motoranzahl}) + K$$

ermittelt.

Die Anzahl der Ausbuchtungen ist in dem vorliegenden Fall 10, die Motor-Nr. ist entweder 1, 2 oder 3. n ist eine für jeden Motoren frei wählbare ganze Zahl und die Konstante K ist für alle Motoren eine gleichbleibende Konstante. In dem vorliegenden Fall ist n = 1 und K = 0 Die Motoren können in gleichmäßigen oder unregelmäßigen Abständen angeordnet sein. Insbesondere können die Motoren in ihrer Betriebsfrequenz unterschiedlich ausgelegt sein. Die Motoren können alle parallel geschaltet sein oder einzeln angesteuert werden. Vorteilhafterweise wird die Anordnung mit einem frequenzmodulierten Signal angesteuert. Über die Modulation der Ansteuerfrequenz kann die Position des Läufers oder Rotors genau gesteuert werden. Alternativ können die Motoren die gleiche Betriebsfrequenz aufweisen und abwechselnd angesteuert werden. Für den Fachmann sind auch Mischvarianten erkennbar.

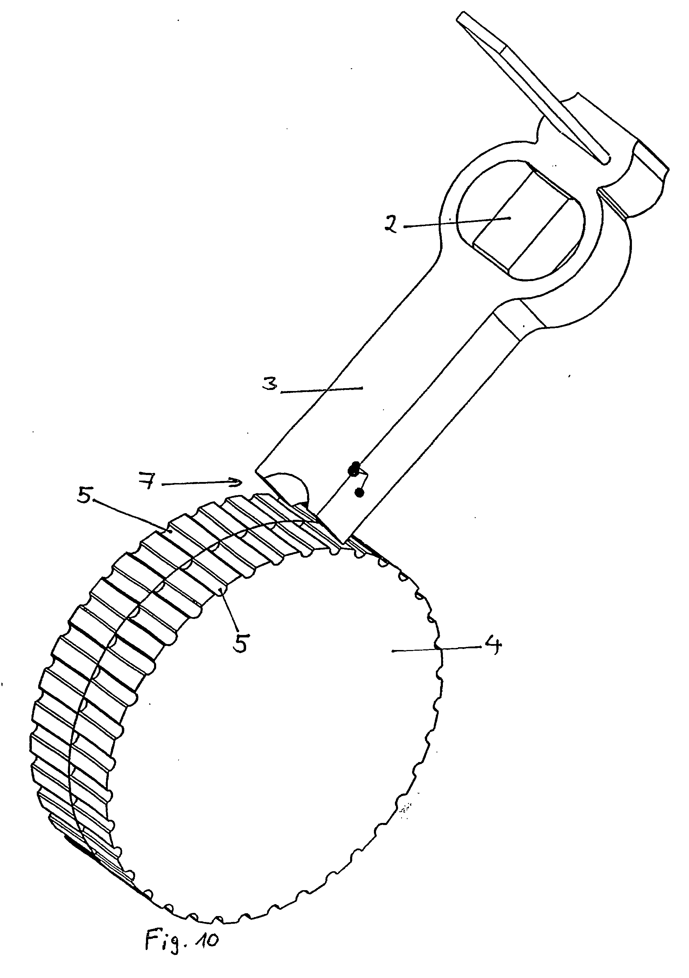

**Figur 10** zeigt eine besondere Ausführungsform der Oberflächengestaltung des anzutreibenden Rotors 4. Die Oberfläche weist zwei Streifen von periodisch wiederkehrenden Ein- bzw. Ausbuchtungen auf, die zueinander versetzt sind. In dieser Anordnung weist der Resonator zwei Kontaktzonen auf, die je nach elektrischer Anregung des Resonators abwechselnd zum Vortrieb des Rotors beitragen.

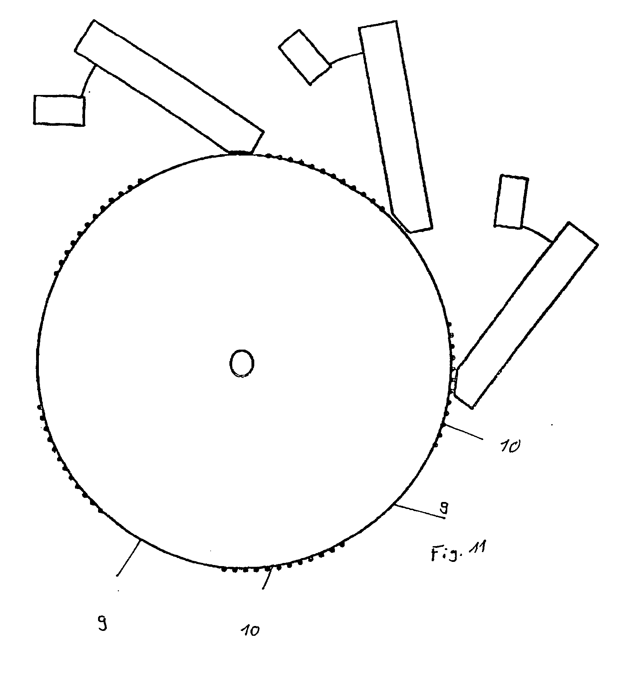

Das Antriebssystem gemäß **Figur 11** entspricht im wesentlichen dem Antriebssystem gemäß Figur 10, mit der Ausnahme, daß der Rotor keine Ausbuchtungen sondern Zonen mit unterschiedlichen Reibkoeffizienten aufweist. Die Zone 10 hat einen höheren Reibkoeffizient als die Zone 9.

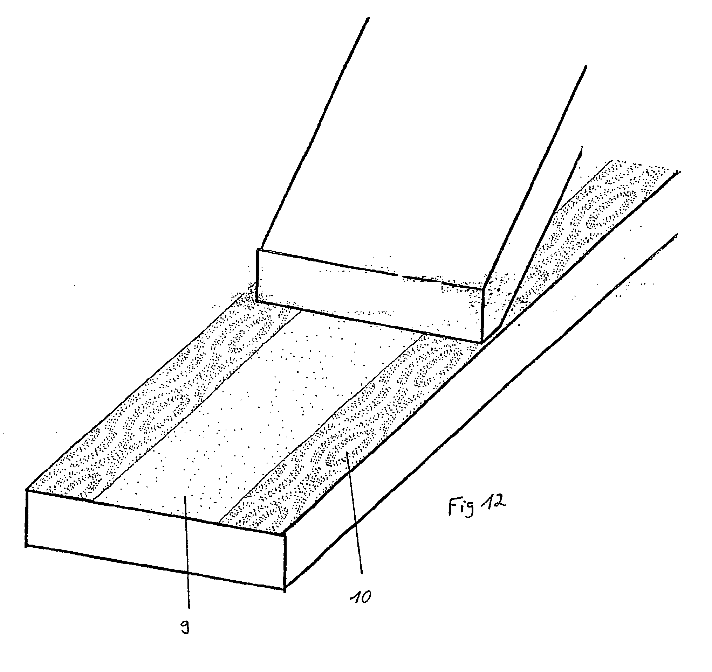

Die **Figur 12** zeigen eine Vorrichtung 4, deren Oberfläche Zonen mit unterschiedlichen Reibkoeffizienten 9, 10 aufweist. Die Zone 10 hat einen höheren Reibkoeffizient als die Zone 9. Diese Anordnung führt den Läufer, da die Vorschubgeschwindigkeit von dem Reibkoeffizient abhängt. Dabei kann je nach Vibrationsform sowohl der Bereich hoher, aber auch der Bereich geringer Reibung zu höheren Vorschubgeschwindigkeiten führen. Driftet die Vorrichtung zu einer Seite ab, so verschiebt sich der Kontaktbereich zwischen Resonanzkörper und Läufer 4, so daß auf einer Seite mehr Vorschub als auf der anderen Seite auftritt, so daß der Läufer in seine gewünschte Lage zurückgeführt wird.

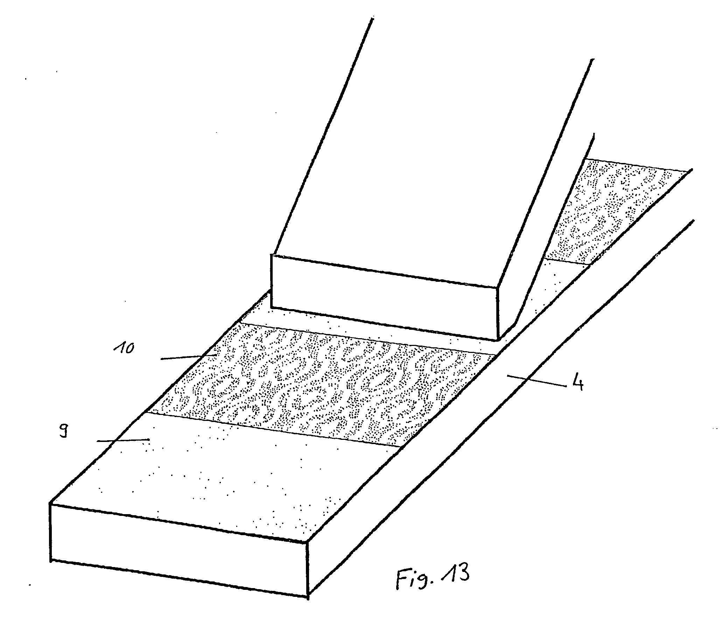

**Figur 13** zeigt eine weitere Anordnung von Flächen mit unterschiedlichen Reibkoeffizienten. Im übrigen gelten die Ausführungen zu Figur 12.

Der Fachmann erkennt bei allen Beispielen, daß die Vorrichtung eine beliebige Form haben kann und nicht auf die Form eines Stabes oder eines Rotors beschränkt ist. Beispielsweise kann der Stab auch gewellt sein und die Vorrichtung kann beispielsweise auch eine Platte sein, die vorzugsweise Nuten oder einen Streifen mit einem zur restlichen Platte unterschiedlichen Reibkoeffizienten.

Der Fachmann erkennt weiterhin, daß die Ausbuchtungen und die unterschiedlichen Reibkoeffizienten auch in Kombination miteinander in einem Antriebssystem eingesetzt werden können.

## Patentansprüche

1. Antriebssystem, bestehend aus mindestens einem Motor (1), mit jeweils zumindest einem Schwingungsgenerator (2) sowie jeweils mindestens einem Resonanzkörper (3) und einer Vorrichtung (4), die von dem Motor (1) angetrieben wird, wobei der Resonanzkörper (3) eine Kontaktfläche (7) aufweist, die mit der Oberfläche (6) der Vorrichtung (4) zusammenwirkt, um diese anzutreiben, **dadurch gekennzeichnet, dass** die Kontaktfläche (7) eines Resonanzkörpers ein Mittel aufweist oder dass die Oberfläche (6) der Vorrichtung ein Mittel aufweist, das mit einer Kontaktfläche eines Resonanzkörpers zusammenwirkt, und dass das eine Mittel die Vorrichtung (4) führt.

2. Antriebssystem nach Anspruch 1, **dadurch gekennzeichnet, dass** das Mittel mindestens eine Ein- oder Ausbuchtung (5) ist oder dass die Kontaktfläche (7) und/oder die Oberfläche (6) Bereiche mit unterschiedlichen Reibkoeffizienten aufweist.

3. Antriebssystem nach Anspruch 1 oder 2, dadurch gekennzeichnet, dass die Oberfläche (6) mehrere Ein- oder Ausbuchtungen (5) oder mehrere Bereiche mit jeweils unterschiedlichen Reibkoeffizienten aufweist, die in regelmäßigen Abständen zueinander angeordnet sind.

4. Antriebssystem nach Anspruch 2 oder 3, **dadurch gekennzeichnet, dass** die Ein- bzw. Ausbuchtungen (5) eine Tiefe bzw. Höhe von 0,05 - 10 mm. vorzugsweise 0,5 - 3 mm aufweisen.

5. Antriebssystem nach einem der Ansprüche 1 bis 4, **dadurch gekennzeichnet, dass** es mindestens zwei Motoren (1) aufweist, die gleich- oder gegensinnig angeordnet sind.

6. Antriebssystem nach Anspruch 5, **dadurch gekennzeichnet, dass** die Motoren mit einer Kraft (F) gegen die Vorrichtung (4) gedrückt werden, die jeweils unterschiedlich ist.

7. Antriebssystem nach Anspruch 5 oder 6, **dadurch gekennzeichnet, dass** die Motoren einzeln oder parallel ansteuerbar sind.

8. Antriebssystem nach einem der Ansprüche 5 bis 7, **dadurch gekennzeichnet, dass** die Motoren jeweils mit unterschiedlichen Frequenzen und/oder Amplituden betreibbar sind.

9. Antriebssystem nach einem der Ansprüche 1 bis 8, **dadurch gekennzeichnet, dass** die Vorrichtung (4) translatorisch oder rotatorisch, vorzugsweise bidirektional bewegbar ist.

10. Antriebssystem nach einem der Ansprüche 1 bis 9, **dadurch gekennzeichnet, dass** der Schwingungsgenerator (2) aus piezoeletrischem Material ist.

11. Antriebssystem nach einem der Ansprüche 2 bis 10, **dadurch gekennzeichnet, dass** die Einbuchtung (5) durch Abrieb erzeugbar ist.

12. Antriebssystem nach einem der Ansprüche 1 bis 11, **dadurch gekennzeichnet, dass** es die Eigenschaften eines Schrittmotors aufweist.

13. Antriebssystem nach einem der vorhergehenden Ansprüche, bei dem die Stärke der erzeugten Bewegung bei gleichbleibender Anregung gezielt von der Lage der Vorrichtung oder dem Drehwinkel des Rotors vorgegeben ist

## Claims

1. A drive system, comprising at least one motor (1) having at least one vibration generator (2) each as well as at least one resonator (3) each and a device (4) that is driven by the motor (1), wherein the resonator (3) comprises a contact area (7) that cooperates with the surface (6) of the device (4) to drive said device, **characterized by** the resonator contact area (7) comprising a means or the device surface (6) comprising a means that interacts with a contact area of a resonator, and by the means guiding the device (4).

2. The drive system of claim 1, **characterized by** the means comprising at least an indentation or protrusion (5) or the contact area (7) and/or the surface (6) comprising regions with differing friction coefficients.

3. The drive system of claim 1 or 2, **characterized by** the surface (6) comprising a plurality of indentations or protrusions (5) or several regions with differing friction coefficients each that are spaced apart in regular intervals with respect to each other.

4. The drive system of claim 2 or 3, **characterized by** the indentations or the protrusions (5) having a respective depth or height of 0.05 - 10 mm, preferably of 0.5 - 3 mm.

5. The drive system of one of claims 1 through 4, **characterized by** comprising at least two motors (1) that are arranged in identical or opposing orientations.

6. The drive system of claim 5, **characterized by** the motors being urged against the device (4) with respective forces (F) that differ from each other.

7. The drive system of one of claims 5 or 6, **characterized by** the motors being controllable individually or in parallel.

8. The drive system of one of claims 5 through 7, **characterized by** the motors each being operable at differing frequencies and/or with differing amplitudes.

9. The drive system of one of claims 1 through 8, **characterized by** the device (4) being movable in a translating or rotary, preferably bi-directional, fashion.

10. The drive system of one of claims 1 through 9, **characterized by** the piezoelectric generator (2) comprising a piezoelectric material.

11. The drive system of one of claims 2 through 10, **characterized by** the indentation (5) being producible by wear.

12. The drive system of one of claims 1 through 11, **characterized in that** it has the characteristics of a stepper motor.

13. The drive system of one of the previous claims, wherein the force of the generated motion is predetermined by the position of the device or the rotor rotation angle when the excitation remains the same.

## Revendications

1. Système d'entraînement, comprenant au moins un moteur (1) comportant au moins un générateur de vibrations (2) chacun ainsi qu'au moins un résonateur (3) chacun et un dispositif (4) qui est entraîné par le moteur (1 ), dans lequel le résonateur (3) comprend une zone de contact (7) qui coopère avec la surface (6) du dispositif (4) de façon à entraîner ledit dispositif, **caractérisé en ce que** la zone de contact (7) du résonateur comprend des moyens ou **en ce que** la surface (6) du dispositif comprend des moyens qui interagissent avec une zone de contact d'un résonateur, et **en ce que** les moyens guident le dispositif (4).

2. Système d'entraînement selon la revendication 1, **caractérisé en ce que** les moyens comprennent au moins une indentation ou une saillie (5) ou **en ce que** la zone de contact (7) et/ou la surface (6) comprennent des régions avec des coefficients de frottement différents.

3. Système d'entraînement selon la revendication 1 ou 2, **caractérisé en ce que** la surface (6) comprend une pluralité d'indentations ou de saillies (5) ou plusieurs régions avec des coefficients de frottement différents chacune, qui sont espacées à intervalles réguliers les unes des autres.

4. Système d'entraînement selon la revendication 2 ou 3, **caractérisé en ce que** les indentations ou les saillies (5) ont une profondeur ou une hauteur respective comprise entre 0,05 et 10 mm, et, de préférence, entre 0,5 et 3 mm.

5. Système d'entraînement selon l'une des revendications 1 à 4, **caractérisé en ce qu'**il comprend au moins deux moteurs (1) qui sont agencés selon des orientations identiques ou opposées.

6. Système d'entraînement selon la revendication 5, **caractérisé en ce que** les moteurs sont poussés contre le dispositif (4) avec des forces respectives (F) qui diffèrent entre elles.

7. Système d'entraînement selon l'une des revendications 5 ou 6, **caractérisé en ce que** les moteurs peuvent être commandés individuellement ou en parallèle.

8. Système d'entraînement selon l'une des revendications 5 ou 7, **caractérisé en ce que** les moteurs peuvent chacun fonctionner à des fréquences différentes et/ou avec des amplitudes différentes.

9. Système d'entraînement selon l'une des revendications 1 à 8, **caractérisé en ce que** le dispositif (4) est mobile selon un mode de translation ou de rotation, de préférence bidirectionnel.

10. Système d'entraînement selon l'une des revendications 1 à 9, **caractérisé en ce que** le générateur piézo-électrique (2) comprend un matériau piézo-électrique.

11. Système d'entraînement selon l'une des revendications 2 à 10, **caractérisé en ce que** l'indentation (5) peut être générée par une usure.

12. Système d'entraînement selon l'une des revendications 1 à 11, **caractérisé en ce qu'**il a les caractéristiques d'un moteur pas-à-pas.

13. Système d'entraînement selon l'une des revendications précédentes, dans lequel la force du déplacement généré est prédéterminée par la position du dispositif ou l'angle de rotation du rotor lorsque l'excitation demeure la même.

Fig. 1

Fig. 2

Fig. 3

Fig.4

Fig. 5

3

7

5

5

5

6

5

4

Fig. 6

Fig 7

Fig. 8

Fig. 3

Fig. 10

Fig. 11

Fig 12

10

9

EP 1 430 592 B1

Fig. 13

21